# FASCICULE DE BREVET EUROPEEN

(11) **EP 0 958 582 B1**
(45) Date de publication et mention de la délivrance du brevet: **22.02.2006**
(21) Numéro de dépôt: 98958981.7
(22) Date de dépôt: 08.12.1998
(51) Int. Cl.: H01B 3/42, H01B 13/14, C08L 67/02, C08L 23/08

(54) **FIL ELECTRIQUE AYANT UN ISOLANT MINCE A BASE DE POLYBUTYLENETEREPHTALATE**
ELEKTRISCHER DRAHT MIT DÜNNER ISOLIERUNG AUF BASIS VON POLYBUTYLENTEREPHTHALAT
ELECTRIC WIRE WITH THIN INSULATION BASED ON POLYBUTYLENETEREPHTHALATE

(30) Priorité: 08.12.1997 FR 9715501
(43) Date de publication de la demande: 24.11.1999
(73) Titulaire: Acome Société Cooperative De Travailleurs, 75008 Paris (FR)
(72) Inventeur: LAGREVE, Christian, F-61700 Lonlay l'Abbaye (FR); BRAULT, Alain, F-50600 Parigny (FR); LECAPITAINE, Régis, F-50140 Romagny (FR)
(74) Mandataire: Boulinguiez, Didier
(86) Numéro de dépôt international: PCT/FR1998/002658
(87) Numéro de publication internationale: WO 1999/030330

(56) Documents cités:
- EP-A- 0 622 415
- WO-A-89/00761
- WO-A-89/00763
- WO-A-93/08234
- WO-A-95/12636
- DE-A- 2 915 155
- DE-A- 4 336 385
- US-A- 3 861 029
- DATABASE WPI Section Ch, Week 7928 Derwent Publications Ltd., London, GB; Class A23, AN 79-51691B XP002097343 & JP 54 068990 A (TEIJIN LTD), 2 juin 1979
- KANG, T.-K. ET AL: "PROPERTIES OF POLY(BUTYLENE TEREPHTHALATE)/FUNCTIONALIZED POLYOLEFIN BLENDS" POLYMER ENGINEERING & SCIENCE, vol. 37, no. 3, mars 1997, pages 603-614, XP000697708
- PATENT ABSTRACTS OF JAPAN vol. 015, no. 072 (C-0808), 20 février 1991 & JP 02 296861 A (SUMITOMO ELECTRIC IND LTD), 7 décembre 1990
- PATENT ABSTRACTS OF JAPAN vol. 018, no. 462 (C-1243), 29 août 1994 & JP 06 145483 A (SUMITOMO ELECTRIC IND LTD), 24 mai 1994

## Description

La présente invention porte sur des fils électriques notamment pour l'automobile dont l'isolant protecteur est de faible épaisseur et est réalisée en alliage extrudé de polymères compatibles. L'invention porte également sur le procédé de fabrication du fil électrique dans lequel l'alliage de polymères compatibles est mis en oeuvre par extrusion sans étape complémentaire de réticulation ou de traitement thermique autour du fil électriquement conducteur.

Il existe une demande importante dans l'industrie automobile pour des fils de moins en moins volumineux et de plus en plus légers qui néanmoins présentent d'excellentes propriétés, notamment d'excellentes propriétés d'isolant électrique et de résistance à l'abrasion.

Ces fils électriques doivent en outre présenter un faible coefficient de retrait, d'excellentes propriétés de résistance mécanique et chimique ainsi qu'une bonne stabilité au vieillissement tout en étant économiques.

La Société Déposante, après de nombreuses recherches, a eu le grand mérite de mettre au point des fils électriques présentant l'ensemble de ces caractéristiques. Ces fils électriques sont constitués d'un fil métallique conducteur autour duquel est extrudé un alliage de polymères compatibles comprenant, les pourcentages étant exprimés en poids par rapport au poids desdits polymères :
- de 5 à 40% d'au moins une polyoléfine polaire,
- de 50 à 80% de polybutylènetéréphtalate,
- jusqu'à 15%, de préférence jusqu'à 10% d'au moins un agent ignifugeant non polymère,
- et éventuellement des charges non conductrices,

ledit alliage extrudé formant un isolant protecteur ayant une épaisseur inférieure à 0,25 mm, de préférence inférieure à 0,2 mm et plus préférentiellement encore inférieure à 0,16 mm, pour un fil métallique de 0,35 mm² de section.

Dans la présente invention, on entend par "alliage de polymères compatibles" un mélange d'au moins deux polymères qui sont non miscibles mais qui sont compatibles ou un mélange d'au moins deux polymères non miscibles et non compatibles mais rendus compatibles par l'addition d'un agent de compatibilisation. La mise en oeuvre d'un tel alliage de polymères compatibles par extrusion permet d'obtenir une structure composite.

Selon l'invention, la polyoléfine polaire entrant dans la composition de l'alliage est très peu cristalline. De préférence il s'agit d'un élastomère et elle est choisie parmi les copolymères d'éthylène/acrylate d'alkyle en C₁-C₄, ou leurs mélanges. Plus préférentiellement on utilise un copolymère d'éthylène/acrylate de méthyle.

Dans la présente invention, on entend par "agent ignifugeant non polymère", un agent ignifugeant incorporé directement dans le mélange de matières premières constituant l'alliage polymère. Il ne s'agit donc pas d'ignifuger un polymère de l'alliage avant son incorporation avec les autres constituants de l'alliage. Ainsi, tous les constituants de l'alliage sont des composés standards que l'on trouve sur le marché et qui ne nécessitent aucune transformation préalable. Un tel agent ignifugeant peut être un composé bromé tel que le décarbromodiphényloxyde, avec du trioxyde d'antimoine.

L'alliage constituant l'isolant protecteur peut incorporer différents additifs, par exemple des agents antioxydants et des charges électriquement non conductrices.

Le choix des additifs sera bien entendu fonction des caractéristiques souhaitées pour le fil électrique selon l'invention.

L'épaisseur de l'isolant peut être supérieure aux valeurs indiquées ci-dessus lorsque la section du fil conducteur est supérieure à 0,35mm². En particulier, pour un fil de 2,5mm² de section, l'épaisseur de la gaine peut être de 0,6mm. Cependant, quelle que soit la section du fil conducteur, l'épaisseur de la gaine en alliages de polymères compatibles décrit ci-dessus est toujours inférieure à l'épaisseur des gaines classiques.

Le fil électrique selon l'invention est caractérisé par le fait qu'il présente de bonnes propriétés de résistance mécanique, notamment une bonne résistance à l'abrasion, un bon allongement à la rupture, une résistance à l'enroulement à froid satisfaisante, une bonne résistance à la pression à chaud, et/ou une bonne tenue au feu. Par ailleurs, il présente une bonne résistance chimique notamment, une bonne résistance à l'huile et une bonne résistance à l'hydrolyse. Il présente également des caractéristiques de vieillissement tout à fait satisfaisantes.

Compte tenu de ces propriétés, les fils électriques conformes à l'invention peuvent être utilisés sans difficulté à basse température.

Les fils électriques pour l'automobile selon l'invention :
- passent le test de tenue au feu, selon la norme ISO 6722;
- présentent une résistance à l'abrasion, telle que mesurée selon la norme ISO 6722, pour des fils de diamètre global 1,35mm, ayant une âme métallique de section 0,35 mm², de 150 à 700, de préférence de 250 à 400 cycles, et plus préférentiellement encore de 350 cycles;
- présentent un allongement à la rupture supérieur à 200%, de préférence supérieur à 300% et plus préférentiellement encore de 400%;
- passent le test d'enroulement à froid, selon la norme ISO 6722 ;
- présentent une résistance à la pression à chaud à 150° C, telle que mesurée selon la norme ISO 6722, de 0,001 à 0,15mm, de préférence de 0,04 à 0,10mm, et plus préférentiellement encore de 0,03 à 0,08mm ;
- passent le test de vieillissement pendant 3000 heures à 150°C, selon la norme ISO 6722.

En outre, ils peuvent présenter les caractéristiques supplémentaires suivantes :
- passent le test de résistance à l'eau chaude selon la norme FORD 597GG-14401-Aa ;
- présentent une résistance à l'huile, telle que mesurée selon la norme FORD 597GG-14401-AA inférieure à 4% de gonflement.

La résistance à l'abrasion pour des fils de section supérieure à 0,35mm² sera bien entendu supérieure aux valeurs indiquées ci-dessus pour des fils de plus grande section.

La présente invention porte également sur le procédé d'obtention de ces fils électriques qui comprend les étapes suivantes, au cours desquelles :
- on mélange l'ignifugeant, les additifs éventuels et la polyoléfine polaire, dans les proportions indiquées ci-dessus,
- on extrude le mélange obtenu avec la quantité indiquée ci-dessus de polybutylènetéréphtalate pour obtenir des granulés,
- on extrude ensuite les granulés autour d'un fil électriquement conducteur, notamment d'un fil de cuivre, sans avoir recours à une étape supplémentaire de réticulation
ou de traitement thermique pour obtenir l'épaisseur souhaitée de l'isolant protecteur.

Ainsi, le procédé selon l'invention est très économique étant donné d'une part, qu'il permet l'utilisation de polybutylènetéréphtalate standard, aucune étape préalable d'ignifugation du polybutylènetéréphtalate n'étant nécessaire, et d'autre part, qu'il permet d'obtenir des fils électriques présentant de bonnes propriétés directement par extrusion sans qu'il soit nécessaire d'ajouter un traitement thermique ou une réticulation.

Toutes les caractéristiques de ces fils électriques sont obtenues après simple extrusion de l'alliage de polymères compatibles décrit ci-dessus autour d'un fil métallique conducteur, sans qu'aucun traitement supplémentaire, tels qu'un traitement thermique ou une réticulation, ne soit nécessaire et malgré la faible épaisseur de l'isolant protecteur.

La présente invention va maintenant être décrite plus en détail avec références aux dessins annexés, sur lesquels :

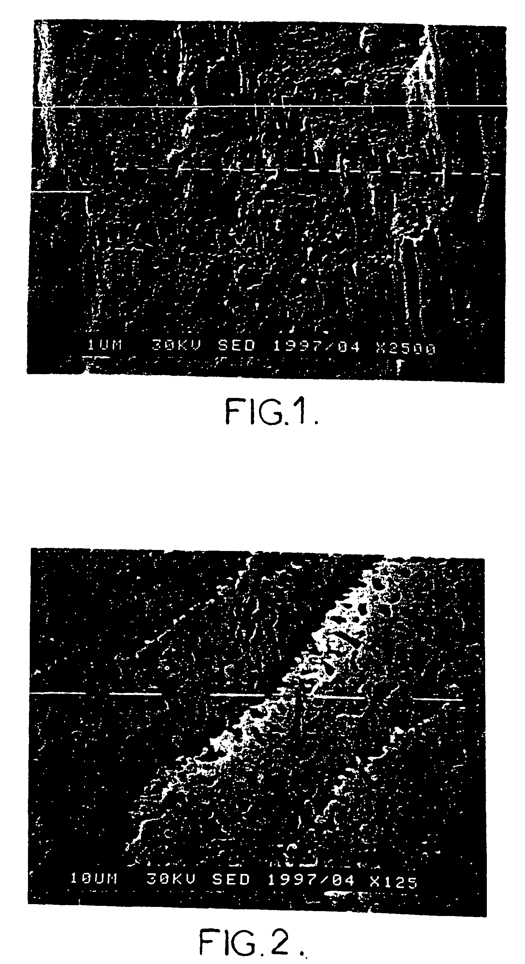

- les figures 1 et 2 représentent des photographies en microscopie électronique de la structure composite d'un alliage de polymères compatibles utilisé comme isolant de fils électriques pour l'automobile selon l'invention, après extraction de l'oléfine polaire, à un grossissement de 2500.

### Exemple 1 :

### Préparation d'un alliage de polymères compatibles selon l'invention et réalisation de fils électriques pour l'automobile

On mélange 15% en poids d'ignifugeant qui est une association de décabromodiphényloxyde avec du trioxyde d'antimoine et 15% en poids de stabilisants (comprenant des anti-oxydants phénoliques, un co-antioxydant soufré et un capteur d'humidité) avec 30% en poids de copolymère éthylène/acrylate de méthyle (EMA). Puis on extrude ce mélange à 260°C avec 70% en poids de polybutylène téréphtalate (PBT). On obtient des granulés. On extrude alors ces granulés à 260°C autour de fils de cuivre de 0,75mm de diamètre. On obtient alors des fils de 0,35mm² de section et de 1,35mm de diamètre (D1) ou de 1,20mm de diamètre (D2).

Les caractéristiques physiques et chimiques de ce fil électrique sont les suivantes .

| **TYPE D'ESSAI** | **NORME** | **RESULTATS** | |
|---|---|---|---|
| | | **D1** | **D2** |
| Abrasion | ISO 6722 | 350 cycles | 180 cycles |
| Enroulement à froid | ISO 6722 | satisfaisant | satisfaisant |
| Pression à chaud à 150°C | ISO 6722 | satisfaisant | satisfaisant |
| Résistance à l'hydrolyse | FORD S97GG-14401-AA | satisfaisant | satisfaisant |
| Résistance à l'huile | FORD S97GG-14401-AA | satisfaisant | satisfaisant |
| Vieillissement 3000 heures à 150°C | ISO 6722 | satisfaisant | satisfaisant |

On extrait ensuite le copolymère d'éthylène/acrylate de méthyle et on observe le matériau au microscope électronique. Les photographies ainsi obtenues sont données sur les figures 1 et 2.

## Revendications

1. Fil électrique constitué d'un fil métallique conducteur autour duquel est extrudé un alliage de polymères compatibles comprenant, les pourcentages étant exprimés en poids par rapport au poids desdits polymères :
- de 5 à 40% d'au moins une polyoléfine, choisie dans le groupe comprenant les copolymères éthylène / acylate d'alkyle en C₁ éthylène / acylate d'alkyle en Cᵤ et leurs mélanges.
- de 50 à 80% de polybutylènetéréphtalate,
- jusqu'à 15%, de préférence jusqu'à 10% d'un agent ignifugeant non polymère,
- et éventuellement des charges non conductrices, ledit alliage extrudé formant un isolant protecteur ayant une épaisseur inférieure à 0,25 mm, de préférence inférieure à 0,2 mm et plus préférentiellement encore inférieure à 0,16 mm, pour un fil métallique de 0,35 mm² de section.

2. Fil électrique selon la revendication 1, **caractérisé par le fait que** l'alliage constituant l'isolant protecteur comprend au moins un agent stabilisant.

3. Fil électrique selon l'une quelconque des revendications 1 ou 2, **caractérisé par le fait qu'**il :
- passe le test de tenue au feu selon la norme ISO 6722 ;
- présente une résistance à l'abrasion, telle que mesurée selon la norme ISO 6722, pour des fils de diamètre global 1,35mm ayant une âme métallique de section 0,35 mm², de 150 à 700, de préférence de 250 à 400, et plus préférentiellement encore de 350 cycles ;
- présente un allongement à la rupture supérieur à 200%, de préférence supérieur à 300% et plus préférentiellement encore de 400%;
- passe le test d'enroulement à froid selon la norme ISO 6722 ;
- présente une résistance à la pression à chaud à 150° C, telle que mesurée selon la norme ISO 6722, de 0,001 à 0, 15mm, de préférence de 0,04 à 0,10mm, et plus préférentiellement encore de 0,03 à 0,08mm ;
- passe le test de vieillissement pendant 3000 heures à 150°C selon la norme ISO 6722 ;

4. Fil électrique selon la revendication 3, **caractérisé par le fait qu'**il
- passe le test de résistance à l'eau chaude, selon la norme FORD 59.7GG-14401-Aa ;
- présente une résistance à l'huile, telle que mesurée selon la norme. FORD 597GG-14401-AA, inférieure à 4% de gonflement.

5. Procédé de préparation de fils électriques, **caractérisé par le fait qu'**il comprend les étapes au cours desquelles :
- on mélange au moins une polyoléfine choisi dans le groupe comprenant les copolymères éthylène/ acylate d'alkyle en C₁, éthylène/acylate d'alkyle en Cu, et leurs mélanges, au moins un agent ignifugeant et éventuellement au moins un additif dans les proportions indiquées à la revendication 1,
- on extrude le mélange obtenu ci-dessus avec du polybutylènetéréphtalate dans les proportions indiquées à la revendication 1, pour obtenir des granulés,
- on extrude les granulés obtenus autour d'un fil électriquement conducteur sans avoir recours à une étape supplémentaire de réticulation ou à un traitement thermique pour obtenir l'épaisseur de l'isolant protecteur définie dans la revendication 1.

## Patentansprüche

1. Elektrischer Draht, welcher aus einem leitenden metallischen Draht besteht, um welchen herum eine Mischung aus kompatiblen Polymeren extrudiert ist, welche in Gewichtsprozenten, bezogen auf das Gewicht dieser Polymere umfassen:
- von 5 bis 40% von wenigstens einem Polyolefin, welches aus der Gruppe ausgewählt ist, welche die Copolymere von Ethylen/Acrylat von C₁-Alkyl-Ethylen/Acrylat von C₁-Alkyl und deren Mischungen umfasst,
- von 50 bis 80% Polybutylenterephthalat,
- bis zu 15%, bevorzugt bis zu 10%, eines nicht-polymeren flammhemmenden Agens,
- und gegebenenfalls nicht-leitfähige Füllstoffe,
wobei die extrudierte Mischung für einen Metall-Draht von 0,35 mm² Querschnitt eine Schutz-Isolierung bildet, welche eine Dicke aufweist, welche kleiner als 0,25 mm, bevorzugt kleiner als 0,2 mm, und noch stärker bevorzugt kleiner als 0,16 mm ist.

2. Elektrischer Draht gemäß Anspruch 1, **dadurch gekennzeichnet, dass** die die Schutz-Isolierung bildende Mischung wenigstens ein stabilisierendes Agens umfasst.

3. Elektrischer Draht gemäß einem der Ansprüche 1 oder 2, **dadurch gekennzeichnet, dass** er:
- den Feuerbeständigkeits-Test gemäß der Norm ISO 6722 besteht;
- eine Abriebfestigkeit, wie sie gemäß der Norm ISO 6722 gemessen wird, für Drähte vom Gesamtdurchmesser von 1,35 mm, welche eine Metall-Seele von 0,35 mm² Querschnitt aufweisen, von 150 bis 700, bevorzugt von 250 bis 400, und noch stärker bevorzugt von 350 Zyklen aufweist;
- eine Bruchdehnung von mehr als 200%, bevorzugt von mehr als 300%, und noch stärker bevorzugt von 400% aufweist;
- den Wickel-Test in Kälte gemäß der Norm ISO 6722 besteht;
- eine Druckfestigkeit in Wärme bei 150°C, wie sie gemäß der Norm ISO 6722 gemessen wird, von 0,001 bis 0,15 mm, bevorzugt von 0,04 bis 0,10 mm, und noch stärker bevorzugt von 0,03 bis 0,08 mm aufweist;
- den Alterungs-Test während 3000 Stunden bei 150°C gemäß der Norm ISO 6722 besteht.

4. Elektrischer Draht gemäß Anspruch 3, **dadurch gekennzeichnet, dass** er:
- den Test zur Widerstandsfähigkeit gegenüber/in warmem Wasser gemäß der Norm FORD 597GG-14401-Aa besteht;
- eine Widerstandsfähigkeit gegenüber/in Öl, wie sie gemäß der Norm FORD 597GG-14401-AA gemessen wird, von weniger als 4% Anschwellen aufweist.

5. Verfahren zum Herstellen elektrischer Drähte, **dadurch gekennzeichnet, dass** es die Schritte umfasst, in deren Verlauf:
- wenigstens ein Polyolefin, welches aus der Gruppe ausgewählt ist, welche die Copolymere von Ethylen/Acrylat von C₁-Alkyl-, Ethylen/Acrylat von C₄-Alkyl- und deren Mischungen umfasst, mit wenigstens einem flammhemmenden Agens und gegebenenfalls mit wenigstens einem Additiv in den in Anspruch 1 angegebenen Anteilen gemischt wird,
- die oben erhaltene Mischung mit Polybutylenterephthalat in den in Anspruch 1 angegebenen Anteilen extrudiert wird, um Granulat(-Körner) zu erhalten,
- die erhaltenen Granulat(-Körner) um einen elektrisch leitenden Draht herum extrudiert werden, ohne auf einen zusätzlichen Schritt einer Vernetzung oder einer thermischen Behandlung zurückzugreifen, um die in Anspruch 1 definierte Dicke der Schutz-Isolation zu erhalten.

## Claims

1. An electric wire made from a metal conductive wire around which is extruded an alloy of compatible polymers comprising, the percentages being expressed by weight relative to the weight of said polymers :
- from 5 to 40% of at least one polar polyolefin, selected from the group comprising the copolymers of ethylene/Cl-alkyl acrylate, ethylene/C4-alkyl acrylate and mixtures thereof
- from 50 to 80% of polybutylene terephthalate,
- up to 15%, preferably up to 10%, of a non-polymer fire-retarding agent,
- and, optionally, non-conductive fillers,
said extruded alloy forming a protective insulation less than 0.25 mm thick, preferably less than 0.2 mm and even more preferably less than 0.16 mm for a metal wire with a 0.35 mm² cross-section.

2. An electric wire according to claim 1, **characterized in that** the alloy forming the protective insulation comprises at least one stabilizing agent.

3. An electric wire according to claim 1 or claim 2, **characterised in that** it:
- passes the fire-resistance test as stipulated by ISO standard 6722;
- has an abrasion resistance, measured in accordance with ISO standard 6722 for wires of an overall diameter of 1.35 mm having a metal core with a 0.35 mm² cross-section of 150 to 700, preferably 250 to 400 and even more preferably 350 cycles;
- has an elongation at break in excess of 200%, preferably greater than 300% and even more preferably greater than 400%;
- passes the bending test under cold conditions in accordance with ISO standard 6722;
- has a resistance to pressure under heat at 150°C as measured by ISO standard 6722 of 0.001 to 0.15 mm, preferably 0.04 to 0.10 mm and even more preferably from 0.03 to 0.08 mm;
- passes the ageing test for 3,000 hours at 150°C in accordance with ISO standard 6722.

4. An electric wire according to claim 3, **characterised in that** it
- passes the test of resistance to hot water in accordance with standard FORD 597GG-14401-AA;
- has a resistance to oil, as measured in accordance with standard FORD 597GG-14401-AA, of less than 4% swelling.

5. A method of preparing electric wires, **characterised in that** it comprises steps during which:
- at least one polyolefin selected from the group comprising the copolymers of ethylene/C1-alkyl acrylate, ethylene/C4-alkyl acrylate and mixtures thereof, at least one fire-retarding agent and optionally at least one additive are mixed in the proportions defined in claim 1,
- the mixture obtained above is extruded with polybutylene terephthalate in the proportions defined in claim 1 to obtain granulates,
- the granulates are then extruded around an electrically conductive wire without the need for additional cross-linking or a thermal process to obtain the thickness of protective insulation defined in claim 1.
